# EUROPÄISCHE PATENTANMELDUNG

(11) **EP 2 289 859 A2**
(43) Veröffentlichungstag der Anmeldung: **02.03.2011**
(21) Anmeldenummer: 10007842.7
(22) Anmeldetag: 28.07.2010
(51) Int. Cl.: C04B 26/06, C04B 26/28, C04B 41/48

(54) **Wasserbasiertes Beschichtungsmittel**

(30) Priorität: 29.07.2009 DE 102009035267
(71) Anmelder: Fabrino Produktionsgesellschaft mbH & Co. KG, 88319 Aitrach (DE)
(72) Erfinder: Rockermaier, Martin, 88319 Aitrach (DE)
(74) Vertreter: Thalmeir, Anton

(57) **Zusammenfassung**

Die Erfindung betrifft ein wasserbasiertes Beschichtungsmittel zur Oberflächenmodifizierung bei Erzeugnissen aus hydraulisch härtenden Zusammensetzungen, insbesondere aus Beton oder Mörtel, umfassend: zumindest ein Modifizierungsmittel, ein alkalilösliches polymeres Bindemittel und Wasser. Das alkalilösliche polymere Bindemittel ist in Gegenwart von Basen wasserlöslich und zersetzt bzw. baut sich in Kontakt mit Erdalkali-lonen ab. Die Erfindung betrifft ebenfalls die Verwendung des Beschichtungsmittels bei der Positiv- als auch bei der Negativanwendung, sowie ein Trägermaterial mit darauf aufgebrachtem wasserbasierten Beschichtungsmittel.

## Beschreibung

Die vorliegende Erfindung betrifft ein wasserbasiertes Beschichtungsmittel zur Oberflächenmodifizierung bei Erzeugnissen aus hydraulisch härtenden Zusammensetzungen, insbesondere aus Beton oder Mörtel, umfassend zumindest ein Modifizierungsmittel, ein alkalilösliches polymeres Bindemittel und Wasser, die Verwendung der wasserbasierten Beschichtungsmittel bei der Positiv- und bei der Negativanwendung, sowie Trägermaterialien, insbesondere Polymerfolien, mit darauf aufgebrachtem wasserbasierten Beschichtungsmittel.

Bei der Verarbeitung von hydraulisch härtenden Zusammensetzungen bedient man sich in der Regel, insbesondere bei großen Bauobjekten, Schalungen, in welche die hydraulisch härtende Zusammensetzung eingefüllt wird, und worin die Zusammensetzung unter Bildung eines Erzeugnisses abbindet. Die Oberflächenstruktur der verwendeten Schalung wird in Form eines Negatives von der Oberfläche des Erzeugnisses wiedergegeben.

Zu den gängigsten hydraulisch härtenden Zusammensetzungen zählen Portlandzement, Portlandkompositzement und Hochofenzement, aber auch Tonerdezement, Phosphatzement, Baugips und Anhydritbinder.

Ein Beispiel für eine hydraulisch härtende Zusammensetzung, bei der die Oberfläche modifiziert wurde, ist der sogenannte Waschbeton. Waschbeton ist ein spezieller Beton, bei dem die Oberfläche aus einer Gesteinskömung besteht, die aus dem Beton durch eine spezielle Oberflächenbehandlung, nämlich Waschen, freigelegt wird. Der auf diese Weise mit einem "Dekor" versehene und veredelte Beton findet Anwendung in Form von Fassadenverkleidungen, Lärmschutzwänden, Bodenplatten oder als Waschbetonpapier, aber auch bei dreidimensionalen Objekten, wie z.B. bei Pflanzkübeln.

Zur Herstellung von Erzeugnissen aus Waschbeton werden die Oberflächen der verwendeten Form oder Schalung, in die der Beton gefüllt wird, mit einer speziellen Beschichtung, dem sogenannten Kontaktverzögerer bestrichen, oder es wird ein mit dieser speziellen Beschichtung versehenes Trägermaterial in die Form oder Schalung eingelegt. Diese Beschichtung enthält einen Abbindeverzögerer, der dazu führt, dass der Beton an den betreffenden Stellen der Oberfläche, die mit der Beschichtung versehen sind, nicht abbinden kann.

Je nachdem, auf welche Fläche der Kontaktverzögerer aufgebracht wird, spricht man von Negativanwendung bzw. Positivanwendung. Bei der Positivanwendung wird der Kontaktverzögerer als Auswaschlack direkt auf die Oberfläche des Frischbetons aufgebracht, die in Kontakt mit der Luft ist, und nach dem Aushärten des Betons wird der Auswaschlack dann von der Betonoberfläche ausgewaschen. Bei der Negativanwendung dagegen wird der Kontaktverzögerer direkt auf die Schalung der Form aufgebracht. Somit können mit der Negativanwendung auch diejenigen Oberflächen des fertigen Betonteils ausgewaschen werden, welche man mit der Positivanwendung nicht erreichen kann.

Nach dem Abbinden des Betons wird die Oberfläche des Erzeugnisses, die in Kontakt mit der aufgebrachten Beschichtung, d.h. dem Kontaktverzögerer, war, bei beiden Anwendungen mit einem scharfen Wasserstrahl abgewaschen, gegebenenfalls auch unter Einsatz von Bürsten, wobei an der Oberfläche nur noch die gröbere Gesteinskömung zurückbleibt.

Durch die durch die beiden Anwendungen bedingte unterschiedliche Verarbeitung und Einwirkung des Kontaktverzögerers muss dieser sehr verschiedene Anforderungen erfüllen, die insbesondere bei der Negativanwendung, d.h. direkter Beschichtung der Schalung oder Form mit dem Kontaktverzögerer, schwieriger zu erfüllen sind.

Zum einen muss sich die Beschichtung, d.h. der Kontaktverzögerer, nach der Entnahme des Formteils bzw. des Erzeugnisses aus der Schalung der Form mühelos von der Formoberfläche entfernen lassen. Andererseits muss die Beschichtung eine ausreichende Haftung an der Schalung aufweisen, um bei der Befüllung der Form nicht vom Beton mitgerissen zu werden. Zudem muss sie beständig genug sein, um einer mechanischen Beanspruchung nach einer gegebenen Einwirkzeit standzuhalten. Hierzu zählt insbesondere das Rütteln des noch dickflüssigen Betons, um diesen zu verdichten und Luftblasen auszutreiben. Dieses Rütteln erfolgt bei größeren Formen erst nach mehreren Minuten. Innerhalb dieser Zeit darf der Abbindeverzögerer, der in der Beschichtung enthalten ist, noch keine verzögernde Wirkung auf den Beton ausüben, da beim Rütteln sich der Beton bewegt und eventuell bereits freigesetzten Abbindeverzögerer aus der Beschichtung mitreißen würde. Das Ergebnis wäre ein unerwünschtes, ungleichmäßiges Erscheinungsbild der Betonoberfläche, da auch der Abbindeverzögerer in der Beschichtung nicht mehr gleichmäßig über die Formoberfläche verteilt wäre. Aufgrund dieser widersprüchlichen Anforderungen, nämlich einer guten Haftung bei der Anwendung und gleichzeitig einer einfachen Entfembarkeit nach der Anwendung, werden bisher die wasserbasierten Kontaktverzögerer überwiegend nur bei Positivanwendungen eingesetzt. Das bedeutet andererseits, dass heutzutage überwiegend nur lösemittelhaltige Kontaktverzögerer zur direkten Aufbringung auf die Schalung oder Form, d.h. bei Negativanwendungen, eingesetzt werden.

Falls die wasserbasierten Kontaktverzögerer jedoch bei Negativanwendungen eingesetzt werden, dann wegen ihrer oben genannten Unzulänglichkeiten nur sehr eingeschränkt. Viele der in bekannten Systemen verwendeten Bindemittel sind wasserlöslich, und der auf der Schalung oder Form durch Abtrocknung entstandene Beschichtungsfilm kann mit Wasser wieder leicht angelöst werden, so dass keine Rüttelfestigkeit der Beschichtung gegeben ist und nur sehr eingeschränkt eine fehlerfreie Ware produziert und geliefert werden kann.

Die bekannten wasserbasierten Kontaktverzögerer enthalten ein wasserlösliches Bindemittel, das nur sehr eingeschränkt eine zeitversetzte Freisetzung des Abbindeverzögerers in die wässrige Phase bietet. Derartige Kontaktverzögerer sind beispielsweise aus EP 1 526 120 A2, DE 22 15 693, DD 230 861 A1, DE 19 20 958 und DE 20 20 339 bekannt. In Kontakt mit dem angemachten Beton geht der auf die Schalung aufgetragene Kontaktverzögerer wieder rasch in Lösung, so dass er beim Befüllen oder Rütteln der Schalung verschoben wird, woraus ein ungleichmäßiges Erscheinungsbild der Betonoberfläche resultiert. Bisher kann bei Kontaktverzögerem, die auf vorgefertigte Trägermaterialien aufgebracht wurden, eine Verzögerung der Freisetzung des Abbindeverzögerers von 5 bis 10 Sekunden (vgl. EP 0 052 237 A2) erreicht werden. Bei wasserbasierten Kontaktverzögerem, welche vor Ort direkt auf die Schalung oder Form aufgebracht werden, kann nur ein Bruchteil dieser Zeitspanne, nämlich etwa 1 bis 2 Sekunden, erreicht werden. Dies ist für einfache, kleine Erzeugnisse, wie z.B. Gehwegplatten, ausreichend, jedoch nicht für große aufwendigere, dreidimensionale monolithische Bauteile, weshalb man bis jetzt auf Kontaktverzögerer auf der Basis von organischen Lösungsmitteln ausweichen musste.

Wässrige Beschichtungssysteme dienen überwiegend zur Herstellung von Trägermaterialien mit Kontaktverzögererbeschichtung, wie z.B. für die Waschbetonpapierherstellung. Eine Anwendung dieser beschichteten Spezialpapiere jedoch ist nur auf ebene Flächen begrenzt, und sie müssen auf die gewünschte Größe für die Kunden zugeschnitten werden. Stellt sich heraus, dass die Spezialpapiere für die geplante Verwendung nicht die richtige Größe aufweisen, z.B. zu klein sind, müssen sie auf Stoß oder überlappend in die Schalung eingelegt werden. Dies führt jedoch dazu, dass sich eine Naht auf den Betonkörper überträgt, was zu einer optischen Beeinträchtigung führen kann.

Um gute Oberflächenqualitäten bei anspruchsvolleren Formen zu erzielen, ist man bisher auf Kontaktverzögerer angewiesen, die auf organischen Lösungsmitteln basieren. Deren Anwendung wird jedoch aufgrund der Begrenzung von Emissionen flüchtiger organischer Verbindungen immer schwieriger. Auch stellen die Beschichtungssysteme auf der Basis von organischen Lösungsmitteln eine Gefahrenquelle für die Verarbeiter dar, da es sich gewöhnlich um Gefahrstoffe handelt.

Es sind auch Rezepturen wässriger Beschichtungen bekannt, die wasserunlösliche Bindemittel enthalten. Diese Beschichtungen weisen jedoch den Nachteil auf, dass sie nach dem Entschalen des Betonformteils nur sehr schwer von der Schalung zu entfernen sind, so dass ein hoher Reinigungsaufwand, ein Schichtaufbau der Schalung bzw. eine einmalige Schalungsverwendung und die damit verbundenen hohen Kosten hingenommen werden müssen.

Der vorliegenden Erfindung liegt die Aufgabe zugrunde, ein wasserbasiertes, gut haftendes Beschichtungsmittel zur Oberflächenmodifizierung bei Erzeugnissen aus hydraulisch härtenden Zusammensetzungen, insbesondere aus Beton oder Mörtel, das eine ausreichend verzögerte Freisetzung eines Modifizierungsmittels an die unter Bildung eines Erzeugnisses hydraulisch härtende Zusammensetzung gewährt und damit ein einfaches, unkompliziertes Befüllen und Rütteln der Schalungen ermöglicht, bei gleichzeitigem mühelosen Reinigen der Schalung nach der Anwendung, sowie ein mit dem erfindungsgemäßen Beschichtungsmittel versehenes Trägermaterial vorzuschlagen.

Diese Aufgabe wird erfindungsgemäß mit dem wasserbasierten Beschichtungsmittel nach Anspruch 1 sowie einem Trägermaterial gemäß Anspruch 13 gelöst. Vorteilhafte Weiterbildungen der Erfindung sind Gegenstand der Unteransprüche.

Es ist bekannt, dass bei Beschichtungen, die ein wasserlösliches Bindemittel enthalten, die Rüttelfestigkeit dieser Beschichtungen durch eine chemische Reaktion verbessert werden kann. Das wasserlösliche Bindemittel kann beispielsweise eine Polyuronsäure, wie z. B. L-Guluronsäure oder D-Mannuronsäure, sein. Diese wasserlöslichen Bindemittel haben die Eigenschaft, dass sie in Kontakt mit Erdalkali-Ionen, z.B. Calcium-lonen, wie sie in hydraulisch aushärtenden Bindemitteln enthalten sind, sofort aushärten. Dadurch wird eine ausreichende Festigkeit der Beschichtung gegen Verrutschen bei leichtem Rütteln und gleichzeitiger verbesserter zeitversetzter Freisetzung eines Modifizierungsmittels erzielt. Die Verfestigung der Beschichtung ist jedoch nicht so stark, so dass sie sich mit einem scharfen Wasserstrahl, z.B. mittels eines Hochdruckreinigers, nach dem Entfernen aus der Schalung entfernen lässt.

Der Einsatz eines alkalilöslichen Bindemittels, das sich allmählich bei Kontakt mit der hydraulisch härtenden Zusammensetzung, z.B. Beton, zersetzt bzw. abbaut, in dem erfindungsgemäßen wasserbasierten Beschichtungsmittel bietet den Vorteil, dass eine ausreichend lange Hinauszögerung der Freisetzung des Abbindeverzögerers aus dem Beschichtungsmittel in die wässrige Phase erreicht werden kann. Das heißt, es wird beim Rütteln der hydraulisch härtenden Zusammensetzung weniger des auf die Schalung aufgetragenen Abbindeverzögerers aus dem Beschichtungsmittel mitgerissen, so dass weder beim Befüllen der Schalung noch beim Rütteln des Frischbetons besondere Sorgfalt erforderlich ist und gleichzeitig ein gleichmäßigeres Erscheinungsbild nach der Modifizierung der Oberfläche durch Auswaschung resultiert.

In Sinne der Erfindung werden die Bezeichnungen Abbindeverzögerer und Modifizierungsmittel synonym verwendet. Des Weiteren ist im Sinne der Erfindung ein alkalilösliches polymeres Bindemittel ein Bindemittel, das üblicherweise wasserunlöslich ist, aber für den Vorgang der Beschichtung mittels Basen, insbesondere flüchtigen Basen, wie z.B. Ammoniak und Aminen wie beispielsweise Diethylamin, Triethylamin, usw., wasserlöslich gemacht werden kann, und das nach dem Härten der Zusammensetzung und dem Austreiben der Base wieder wasserunlöslich ist. Beim Abtrocknen der Beschichtung entweicht die flüchtige Base, insbesondere bei forcierter Trocknung, d.h. z.B. durch die Verwendung von Heizgeräten, und das alkalilösliche Bindemittel wird wieder wasserunlöslich, wodurch eine zeitversetzte Freisetzung des Modifizierungsmittels bzw. Abbindeverzögerers aus der Beschichtung gegeben ist.

Ein weiterer Vorteil ist, dass durch die Auflösung des Bindemittels eine einfachere Reinigung der Schalung erreicht wird, so dass eine wiederholte Verwendung der Schalung möglich ist. Zudem lässt sich durch die Verwendung von Modifizierungsmittein mit einer geringen Wasserlöslichkeit, wie Ester der nachfolgend angegebenen Modifizierungsmittel, z.B. Triethylcitrat, die erst im Kontakt mit dem alkalischen Beton allmählich die verzögernde Wirkung aufbauen, die Hinauszögerung der Freisetzung noch steigern. Dies ermöglicht ein Arbeiten, wie man es von Kontaktverzögerern auf der Basis von organischen Lösungsmitteln gewohnt ist, aber ohne deren Nachteile in Kauf nehmen zu müssen.

Das Beschichtungsmittel zur Oberflächenmodifizierung bei Erzeugnissen aus hydraulisch härtenden Zusammensetzungen, insbesondere aus Beton oder Mörtel, umfasst: 0,05 - 40 Gew.-% Modifizierungsmittel, 0,02 - 99 Gew.-% alkaliltisliches polymeres Bindemittel und zum Rest Wasser.

Wird das Beschichtungsmittel zur Oberflächenmodifizierung bei der Positivanwendung verwendet, d.h. der Kontaktverzögerer wird als Auswaschlack direkt auf die Oberfläche des Frischbetons aufgebracht, so beträgt der Anteil des polymeren Bindemittels in dem Beschichtungsmittel bevorzugt 0,02 -10 Gew.-%.

Wird dagegen das Beschichtungsmittel zur Oberflächenbehandlung bei der Negativanwendung verwendet, d.h. der Kontaktverzögerer wird direkt auf die Schalung der Form aufgebracht, so beträgt der Anteil des polymeren Bindemittels in dem Beschichtungsmittels bevorzugt 10 - 99 Gew.-%.

Ferner umfasst das erfindungsgemäße Beschichtungsmittel 0,00 - 4 Gew.-% Entschäumer, 0,00 - 4 Gew.-% Benetzer, 0,00 - 4 Gew.-% Konservierungsmittel, und 0,00 - 10 Gew.-% Verdicker.

Das Bindemittel liegt in dem wasserbasierten Beschichtungsmittel, insbesondere bei der Negativanwendung, bevorzugt als wasserunlöslicher Stoff in einer Dispersion vor. Hierdurch erhält man nach dem Abtrocknen wasserunlösliche Beschichtungen, welche erst im Kontakt mit der angerührten alkalischen hydraulischen Zusammensetzung allmählich zersetzt bzw. abgebaut werden und dabei die Modifizierungsmittel freisetzen.

Ferner weist das Bindemittel bevorzugt eine Säurezahl von 50 - 300 mg KOH/g, insbesondere 70 - 240 mg KOH/g, vorzugsweise 90 - 180 mg KOH/g auf. Durch die Wahl der geeigneten Säurezahl kann die Zersetzungsgeschwindigkeit des Bindemittels und damit das Maß der zeitversetzten Freisetzung geregelt werden.

Ferner ist ebenfalls bevorzugt, dass das polymere Bindemittel eine Molmasse von über 600 g/mol aufweist. Bei mittleren und größeren Molmassen ist eine bessere Verfilmung des Bindemittels gegeben, d.h. das Bindemittel bildet eine beständigere Filmschicht auf der Schalung.

Das Bindemittel umfasst vorzugsweise ein Polymer, das Carboxylsäure- und/oder Sulfonsäure- und/oder Sulfat- und/oder Phosphonsäure- und/oder Phosphat-Gruppen oder andere Säuregruppen mit einem pKs-Wert zwischen 1 und 7 enthält. Beschichtungsfilme, die aus diesen Polymeren bestehen, sind in bei niedrigen pH-Werten (pH < 7) unlöslich, bei höheren pH-Werten (pH > 7) aber gut löslich.

Als Beispiele für das Bindemittel dienen folgende Verbindungen, wie Polystyrolsulfonsäure, Polyethylensulfonsäure, Polyvinylsulfonsäure und Polyvinylphenylsulfonsäure, von denen Polystyrolsulfonsäure bevorzugt eingesetzt wird. Auch Copolymere von Vinylsulfonsäure und Styrolsulfonsäure können eingesetzt werden. Acrylamido- und Methacrylamido-alkylsulfonsäure (2-Acrylamido-2-methylpropansulfonsäure, 2-Methacrylolyloxiethansulfonsäure), 4-Vinylbenzolsulfonsäure, Allylsulfonsäure, Vinyltoluolsulfonsäure, Vinylphosphonsäure und Vinylbenzolphosphonsäure sind ebenfalls geeignete Bindungsmittel.

Besonders bevorzugt ist ein Bindemittel auf Polymerbasis von α,β-ungesättigen Carbonsäuren, wie z.B. Polyacrylsäure, Acrylsäure enthaltende Copolymere (Ethylen-Acrylsäure-Copolymer, Vinylpyrrolidon-Acrylsäure-Copolymer, Acrylsäureamid-Acrylsäure-Copolymer, Acrylsäureester-Acrylsäure-Copolymer, Styrol-Acrylsäure-Copolymer, Vinyltoluol-Acrylsäure-Copolymer, Maleinsäure-Acrylsäure-Copolymer, Acrylsäure-Styrolsulfonsäure-Copolymer, 2-Acrylamido-2-methylpropan-Sulfonsäure-Acrylsäure-Copolymer, Acrylsäure-Hydroxypropylacrylat-Methylacrylat-Copolymer, Ethylen-Acrylsäure-Butylacrylat-Copolymer, Butadien-Styrol-Acrylsäure-Copolymer, Vinylchlorid-Vinylacetat-Maleinsäure-Copolymer), Polymethacrylsäure, Methacrylsäure enthaltende Copolymere (Methacrylsäure-Isobuthylacrylat-Octadecylmethacrylat-Copolymer), Polyethacrylsäure, Ethacrylsäure enthaltende Copolymere, Polyseneciosäure, Seneciosäure enthaltende Copolymere, Polyitaconsäure, Itaconsäure enthaltende Copolymere, Polycrotonsäure, Crotonsäure enthaltende Copolymere (Vinylacetat-Crotonsäure-Copolymer), Poly-2-Pentensäure, 2-Pentensäure enthaltende Copolymere, Poly-3-Phenylacrylsäure, 3-Phenylacrylsäure enthaltende Copolymere (Styrol-3-Phenylacrylsäure-Copolymer), Polysorbinsäure, Sorbinsäure enthaltende Copolymere, Maleinsäureanhydrid bzw. Maleinsäure (auch teilhydrolysiert oder teilverestert) enthaltende Copolymere (Styrol-Maleinsäureanhydrid-Copolymer, Styrol-Maleinsäure-Copolymer, Ethylen-Maleinsäure-Copolymer, Vinylether-Maleinsäure-Copolymer, Vinylester-Maleinsäure-Copolymer, Isobutylen-Maleinsäureanhydrid-Copolymer, Styrol-Maleinsäure-Acrylsäureester-Copolymer), Fumarsäure enthaltende Copolymere, Maleaminsäure enthaltende Copolymere, das Dimere der Methacrylsäure, Aconitsäure enthaltende Copolymere, Citraconsäure enthaltende Copolymere, weitere saure Gruppen wie Carbonsäure oder Sulfonsäure oder Phenol enthaltende Polymere, z.B. carboxyliertes Styrolbutadien-Copolymer, Polyphenylphenole, Acrylsäure-Styrolsulfonsäure-Copolymer.

Weitere geeignete Polymere umfassen säuresubstituierte Celluloseester bzw. säuresubstituierte Celluloseether, wie z.B. Celluloseacetatphthalat, Cellulosepropionatphthalat, Cellulosebutryratphthalat, Cellulosehydrogenphthalat, Hydroxypropylcellulosephthalat, Hydroxypropylcelluloseacetatphthalat, Hydroxypropylmethylcellulosephthalat, Hydroxypropylmethylcellulosehexahydrophthalat, Hydroxypropylethylcellulosephthalat, Methylcellulosephthalat, Methylcelluloseacetatphthalat, Celluloseacetathexahydrophthalat, Hydroxypropylmethylcellulosesuccinat, Hydroxypropylmethylcelluloseacetatsuccinat, Celluloseacetatsuccinat, Dioxypropylmethylcellulosesuccinat, Celluloseacetattrimellitat, Hydroxypropylmethylcellulosetrimellitat, Celluloseacetatterephthalat, Celluloseacetatisophthalat, Celluloseacetatmaleat, Hydroxypropylmethylcelluloseacetatmaleat, Celluloseacetatbutyrat, Celluloseacetatpropionat, Carboxymethylethylcellulose, oder analoge Amylose-, Stärke- und Inulinderivate, Stärke-Glykolat, Polyvinylacetatphthalat, Polyvinylacetathydrogenphthalat und Natriumcelluloseacetatphthalat.

Kommerzielle Polymere sind unter den Bezeichnungen Eudragit®, Aqoat®, Acryl-EZE®, Suretenc® und Polacrylin® bekannt.

Insbesondere als Bindemittel für die Positivanwendung eignen sich Polymere, die nach dem sogenannten "Egg-Box-Modell" in Kontakt mit zweiwertigen Kationen, wie beispielsweise Calcium-Ionen, ein Gel bilden. Das "Egg-Box-Modell" wurde von G.T. Grant, E.R. Morris, D.A. Rees, P.J.C. Smith and D. Thom in, Biological interactions between polysaccharides and divalent cations: the egg-box model, FEBS Lett, Vol. 32, 195-198, 1973) beschrieben. Bevorzugte Polymere sind Polysaccharide, die einen hohen Uronsäureanteil, wie z.B. Guluronsäure oder Mannuronsäure, aufweisen, bzw. deren Salze mit monovalenten Ionen oder deren Magnesiumsalze, oder deren Ester bzw. Teilester. Besonders bevorzugt sind Polysaccharide, die aus der aus Alginaten, Pektinen, Carrageene und Gellan Gum bestehenden Gruppe ausgewählt sind. Bei Gellan Gum handelt es sich um ein wasserlösliches Polysaccharid, welches durch die aerobe Fermentation der Mikroorganismen Sphingomonas elodea hergestellt wird.

Das erfindungsgemäße wasserbasierte Beschichtungsmittel enthält als Modifizierungsmittel (Abbindeverzögerer), insbesondere in der Negativanwendung, bevorzugt Fruchtsäureester, Zuckerester, Gluconsäureester, Borsäureester, Phosphorsäureester und/oder Phosphonsäureester. Beispiele für Verbindungen, die als Modifizierungsmittel eingesetzt werden können, sind: Carbonsäuren mit 1 - 10 Kohlenstoffatomen, Hydroxy- und Polyhydroxycarbonsäuren, wie Maleinsäure, Weinsäure, Citronensäure, Äpfelsäure, Milchsäure, Ascorbinsäure, Gluconsäure, Glucuronsäure, Induronsäure, Galacturonsäure, Mannuronsäure, Galactarsäure, Heptagluconsäure, Succinsäure, Adipinsäure, Itaconsäure, Malonsäure, Fumarsäure, Oxalsäure, Ameisensäure, Essigsäure, Brenztraubensäure, und deren Salze oder Ester, Triethylcitrat (TEC), Acetyltrieethylcitrat (ATEC), Triebutylcitrat (TBC), Acetyltributylcitrat (ATBC), Acetyltrieoctylcitrat (ATOC), Acetyltri-2-ethylhexylcitrat) ATEHC, Citrofol®, Citrotlex®, Zitronensäureester von Fettsäuremono- und -diglyceriden, Weinsäurester von Fettsäuremono- und -diglyceriden, Gluconsäureester, Aminopolycarbonsäuren (APC) (Iminodiessigsäure (IMDA), Nitrilotriessigsäure (NTA), Ethylendiamindibernsteinsäure (EDDS), Glutaminsäure-N,N-diessigsäure (GLDA), Ethylendiamintetraessigsäure (EDTA), Cyclohexandiamintetraessigsäure (CDTA), N(2-Hydroxylethyl)ethylendiamintetraessigsäure (HEDTA), Diethylentriaminpentaessigsäure (DTPA), 1,3-Propylendiamintetraessigsäure (PDTA), Polyasparaginsäure) und deren Salze oder Ester, Polyhydroxylverbindungen, wie Zucker, (Monosaccharide; Glucose, Galactose, Mannose, Allose, Altrose, Gulose, Idose, Talose, Arabinose, Xylose, Lyxose, Ribose, Fructose, Psicose, Sorbose, Tagatose, Ribulose, Xylilose; Disaccharide: Cellobiose, Maltose, Lactose, Saccharose, Gentibiose, Trehalose; Trisaccharide, wie Raffinose, Gentianose; Polysaccharide, wie: Stärke, Dextrine, Inulin, Cellulose und deren Derivate, wie alkylierte Cellulose (MC), hydroxyalkylierte Cellulose (HEC), carboxmethylierte Cellulose (CMC)) und deren Ester, wie z.B. Saccharoseacetatisobutyrat (SAIB), und deren Ether (Alkylpolyglycoside), Polyalkohole wie Zuckeralkohole (Sorbit, Mannit, Xylit, Erythrit, Pentaerythrit) oder andere zuckerähnliche Stoffe, wie Zuckeraustauschstoffe, Isomalt, Maltit, Lactit, Polyacrylsäure und deren Salze, Ligninsäure und deren Salze, Orthoborsäure, Metaborsäure, Polyborsäure und deren Salze (Dinatriumoktaborat, Dinatriumterabora-decahydrat) oder Ester, Orthophosphorsäure, Metaphosphorsäure, Pyrophosphorsäure, Polyphosphorsäure, Fluorophosphorsäure und deren Salze (Tetrakaliumpyrophosphat, Natriumtripolyphosphat, Natriumhexametaphosphat) oder Ester; organische Phosphorverbindungen wie Phosphonsäuren (Aminotrismethylenphosphorsäure, Diethylentriamin-penta(methylenphosphonsäure), Ethylendiamintetrakis(methylenphosphonsäure), Hexamethylendiamin-tetra(methylenphosphonsäure), 1-Hydroxyethyliden-1,1-diphosphonsäure, 2-Phosphonbutan-1,2,4-tricarboxylsäure, Hexamethylendiamintetra(methylenphosphonsäure), Bis(hexamethylentriaminpenta(methylenphosphonsäure)), 2-Hydroxyethylimin-bis(methylenphosphonsäure) und deren Salze oder Ester, Ligninsulfonsäure und deren Salze, Naphthalinsulfonsäureharze und deren Salze, Melaminsulfonsäureharze und deren Salze, Proteine, z.B. Casein, Amino- und Amidharze, Aminophenol, anorganische Verbindungen oder komplexe Salze mit den Kationen Zink, Blei, Kupfer, Zinn und Cadmium, wie z.B. Bleioxid, Zinkoxid, Zinkchlorid.

Der Entschäumer dient zur Unterdrückung unerwünschter Schaumbildung in dem Beschichtungsmittel.

Als Benetzer können alle bekannten Substanzen verwendet werden, die die Oberflächenspannung herabsetzen.

Geeignete Konservierungsmittel sind antimikrobiell wirkende Substanzen.

Als Verdicker können Schichtsilikate, hochdisperse Kieselsäure, Assoziativverdicker und in Wasser quellende organische Polymere verwendet werden.

Sowohl Entschäumer, Benetzer als auch Konservierungsmittel, die bei der vorliegenden Erfindung verwendet werden können, sind dem Fachmann bekannt und in großer Zahl im Handel erhältlich.

Das erfindungsgemäße wasserbasierte Beschichtungsmittel zur Oberflächenmodifizierung bei Erzeugnissen aus hydraulisch härtenden Zusammensetzungen, insbesondere aus Beton oder Mörtel, kann ferner zusätzliche Additive, wie Füllstoffe, Farbstoffe, Weichmacher, Filmbildehilfsmittel, Koaleszenzmittel, usw. enthalten. Das Beschichtungsmittel kann beispielsweise Füllstoffe bis zu 70 Gew.-%, Farbstoffe bis zu 20 Gew.-%, Weichmacher bis zu 60 Gew.-% und Filmbildehilfsmittel bis zu 5 Gew.-% umfassen.

Als Füllstoff können beispielsweise Siliziumdioxid, Glimmer, Talk, Ton, Kaolin, Calciumsulfat, Bariumsulfat, Aluminiumsilikate, Aluminiumoxid, Aluminiumhydroxid sowie Magnesiumoxid verwendet werden.

Als Farbe eignen sich Titandioxid, Eisenoxide, Chromoxide, Cobaltoxide, Zinkoxide, Ruße oder andere Pigmente und Farben.

Außerdem kann das wasserbasierte Beschichtungsmittel bis zu etwa 60 % eines Weichmachers enthalten, wenn es für einen besonderen Anwendungszweck erforderlich ist, damit bei der Filmbildung durch die in der Dispersion befindlichen Emulsionspolymere niedrigere Temperaturen eingehalten werden können.

Die vorliegende Erfindung stellt ferner ein Trägermaterial zur Negativanwendung mit darauf aufgebrachtem wasserbasierten Beschichtungsmittel gemäß der Erfindung bereit. Das erfindungsgemäße wasserbasierte Beschichtungsmittel kann auf das Trägermaterial durch Rollen, Streichen oder Sprühen aufgebracht werden.

Als Trägermaterial eignen sich für Betonformen geeignete Schalungen, wie Stahl, Holz, Kunststoff, Kompositwerkstoffe, wie Betoplan^{®}, Finnforest Form^{®}, Agepan^{®}, Magnoplan^{®}, Sperraplan^{®}, Strato-Stock^{®}, Primus^{®}, Phenox^{®}, Planox^{®}, und PU-Matrizen, die nicht eben sein müssen, aber auch Papier oder Folien.

Das Trägermaterial ist bevorzugt eine Polymerfolie bzw. ein Verbundwerkstoff aus Papier oder Pappe und einem Polymer (PE, PP ,SB, usw.) oder Wachs und Bitumen. Dies bietet den Vorteil, dass die Aufbringung des Kontaktverzögerers auf das Trägermaterial nicht erst auf der Baustelle erfolgen muss, was nur bei gutem Wetter möglich wäre, um ein Auswaschen zu verhindern. Ferner können die Trägermaterialien sofort eingesetzt werden, was zu einer Zeitersparnis führt.

Durch geeignete Einstellung der Konsistenz kann der Kontaktverzögerer auch mittels Siebdruck oder Plottersystem motivartig auf Papier oder Folien aufgebracht werden, um eine dekorative Gestaltung der Betonoberfläche zu ermöglichen.

Weitere Vorteile, Merkmale und Besonderheiten der Erfindung ergeben sich aus den nachfolgenden Beispielen von bevorzugten, jedoch nicht beschränkenden Ausführungsformen der Erfindung.

Allgemeine Rezeptur für ein wasserbasiertes Beschichtungsmittel zur Oberflächenmodifizierung bei Erzeugnissen aus hydraulisch härtenden Zusammensetzungen, insbesondere aus Beton oder Mörtel: (in Gew.-%)

| | |
|---|---|
| a) Wasser | Rest zu 100 % |
| b) Modifizierungsmittel | 0,05 - 40 % |
| c) Bindemittel | 0,02 - 99 % |
| d) Entschäumer | 0,00 - 4 % |
| e) Benetzer | 0,00 - 4 % |
| f) Füllstoff | 0,00 - 70% |
| g) Farbe | 0,00 - 20 % |
| h) Konservierungsmittel | 0,00 - 4 % |
| i) Verdicker | 0,00 - 10% |
| j) Weichmacher | 0,00 - 40 % |
| k) Filmbildehilfsmittel | 0,00 - 5 % |
| l) Korrosionsschutzmittel | 0,00 - 5 % |

Wird die obige Rezeptur bei der Positivanwendung verwendet, d.h. der Kontaktverzögerer wird als Auswaschlack direkt auf die Oberfläche des Frischbetons aufgebracht, so beträgt der Anteil des polymeren Bindemittels c) in der Rezeptur bevorzugt 0,02 - 10 Gew.-%.

Wird dagegen obige Rezeptur bei der Negativanwendung verwendet, d.h. der Kontaktverzögerer wird direkt auf die Schalung der Form aufgebracht, so beträgt der Anteil des polymeren Bindemittels c) in der Rezeptur bevorzugt 10 - 99 Gew.-%.

Konkrete Beispiele (Angaben in Gewichtsteilen):

### Beispiel A: Beschichtungsmittel, das insbesondere für die Negativanwendung geeignet ist

| | |
|---|---|
| a) Wasser | 263,00 |
| b1) Borax-Decahydrat | 20,00 |
| b2) Zitronensäure | 20,00 |
| b3) Aminotrismethylenphosphorsäure 50% in Wasser gelöst | 6,00 |
| c) Acrylatdispersion (Säurezahl 121 mg KOH/g, Mindestfilmbildetemperatur 4°C) | 400,00 |
| d) Entschäumer | 1,00 |
| e) Benetzer | 2,00 |
| f) Füllstoff | 225,00 |
| g1) Deckweiß | 50,00 |
| g2) Farbe | 2,00 |
| h) Konservierungsmittel | 1,00 |
| i) Verdicker | 10,00 |
| Summe | 1000,00 |

### Beispiel B: Beschichtungsmittel, das insbesondere für die Negativanwendung geeignet ist

| | |
|---|---|
| a) Wasser | 278,125 |
| b) Modifizierungsmittel TEC | 7,75 |
| c) Acrylatdispersion (Säurezahl 130, MFT 10°C) | 438,375 |
| d) Entschäumer | 2,60 |
| e) Benetzer | 2,00 |
| f) Füllstoff | 200,00 |
| g1) Deckweiß | 50,00 |
| g2) Farbe | 2,00 |
| h) Konservierungsmittel | 1,20 |
| i) Verdicker | 3,95 |
| k) Filmbildehilfsmittel | 10,00 |
| l) Korrosionsschutz | 4,00 |
| Summe | 1000,00 |

### Beispiel C: Beschichtungsmittel, das insbesondere für die Negativanwendung geeignet ist

| | |
|---|---|
| a) Wasser | 79,11 |
| b) Modifizierungsmittel TEC | 218,28 |
| c) Acrylatdispersion(Säurezahl 135[mg KOH/g], Tg des Säureharzes 116[°C]) | 692,66 |
| d) Entschäumer | 2,60 |
| e) Benetzer | 2,00 |
| g) Farbe | 0,50 |
| h) Konservierungsmittel | 1,20 |
| i) Verdicker | 3,65 |
| Summe | 1000,00 |

### Beispiel D: Beschichtungsmittel, das insbesondere für die Positivanwendung geeignet ist

| | |
|---|---|
| a) Wasser | 714,29 |
| b) Saccharose | 76,19 |
| c) Alginat | 4,76 |
| f) Siliziumdioxid | 95,24 |
| g1) Deckweiß | 95,24 |
| g2) Eisenoxid | 9,52 |
| i) Verdicker | 4,76 |
| Summe | 1000,00 |

Die Verwendung des erfindungsgemäßen wasserbasierten Beschichtungsmittels bei der Negativanwendung wird im Folgenden beispielhaft anhand von zwei unterschiedlichen Beschichtungsmittelzusammensetzungen beschrieben.

10 - 99 Gew.-% einer sauren Acrylatdispersion (Säurezahl 121 mg KOH/g) werden mit 0,05 - 40 Gew.-% Modifizierungsmittel, z.B. Triethylcitrat, und zum Rest Wasser vermischt und direkt auf die Schalung der Form aufgetragen. Durch das Abtrocknen des Wassers entsteht ein fester Kunststofffilm aus dem Acrylatharz mit dem Triethylcitrat. Nach dem Einfüllen des Betons oder des Mörtels in die Schalung zersetzt sich der vorher gebildete Kunststofffilm bei Kontakt mit dem Beton bzw. dem Mörtel und gibt das Modifizierungsmittel, im vorliegenden Fall das Triethylcitrat, frei.

10 - 99 Gew.-% einer sauren Acrylatdispersion (Säurezahl 121 mg KOH/g) werden mit einer entsprechenden Menge an Ammoniak gelöst und mit 0,05 - 40 Gew.-% Modifizierungsmittel, z.B. Glucose oder Saccharose, und zum Rest Wasser vermischt. Dieses Beschichtungsmittel wird je nach Verwendung entweder direkt auf die Form der Schalung oder auf ein Trägermaterial aufgetragen. Im Anschluss daran wird das Wasser abtrocknen gelassen und das Ammoniak ausgetrieben. Durch das Austreiben des Ammoniaks bildet sich die Säureform des Acrylatharzes wieder, welche nicht sofort in Lösung geht. Wie oben beschrieben, bildet sich auch hier nach dem Abtrocknen des Wassers und dem Austreiben des Ammoniaks ein fester Kunststofffilm aus dem Acrylatharz mit dem Zucker, der sich erst bei Kontakt mit dem Beton oder Mörtel zersetzt und das Modifizierungsmittel, in diesem Fall den Zucker, freigibt. Der Grund für die Verwendung von Ammoniak im vorliegenden Fall besteht darin, dass ein Zucker, wie beispielsweise Glucose oder Saccharose, sich nicht mit der sauren Acrylatdispersion vermischt und beim Abtrocknen des Wasser als gut lösliche Kruste bzw. Schicht auf dem gebildeten Kunststofffilm aus dem Acrylatharz zurückbleiben würde. Durch die Verwendung von Ammoniak jedoch löst sich die Acrylatdispersion auf, und das gelöste Acrylatharz lässt sich gut und gleichmäßig mit dem verwendeten Zucker, wie z.B. Glucose oder Saccharose, vermischen. Nach dem Abtrocknen des Wassers und dem Austreiben des Ammoniaks bleibt dann der Zucker fein verteilt im Acrylatharz zurück und ist dadurch ausreichend gebunden.

Bei einem Versuch wurden die Rezepturen B und C mit Wettbewerbsprodukten, die dem Stand der Technik entsprechen, verglichen. Hierzu wurden die Rezepturen B und C sowie die oben genannten Wettbewerbsprodukte bei Raumtemperatur auf die Schalung aus Wisa Form^{®} aufgetragen und vollständig abtrocknen gelassen. Um das Befüllen der Schalung mit Beton zu simulieren, scheuerte man mit einem weichen, in wässrige Zementschlämme getauchten Schwamm unter leichtem Druck auf den Beschichtungen und beobachtete deren Beständigkeit.

**Tabelle 1: Verwendung des erflndungsgemäßen Beschichtungsmittels bei der Negativanwendung**

| | Lanosan VZ-H 4^{™} von Grace, USA | Waschbetonpaste von Reckli GmbH | Waschpaste von Indutec Rethmeier GmbH | Beispiel B | Beispiel C |
|---|---|---|---|---|---|
| Nassscheuerfestigkeit Verwendung von wässrige Zementschlämmung auf der Schalung | 2 s | 2 s | 1 s | > 2 min | > 2 min |

Wie in Tabelle 1 gezeigt ist, lösen sich die Wettbewerbsprodukte von Grace, Reckli und Rethmeier bereits nach wenigen Wischbewegungen (nach ca. 1 - 2 Sekunden) vollständig von der Schalung. Die erfindungsgemäßen wasserbasierten Beschichtungsmittel gemäß den Beispielen B und C hielten dagegen über einen Zeitraum von 2 Minuten dieser Beanspruchung stand.

Dies bedeutet, dass man bei den Wettbewerbsprodukten nur mit äußerster Vorsicht kleine Betonmengen manuell in die Schalungen einfüllen kann, da andernfalls bei den gegebenen geringen Beständigkeiten (einige Sekunden) die Gefahr des Mitreißens der Beschichtung bestünde, was in Ausschussware resultieren würde. Dagegen kann man mit den erfindungsgemäßen Beschichtungsmitteln Beton zügig maschinell in die Schalungen einfüllen und sofort rütteln. Damit wird ein schnelles, rationelles Arbeiten mit Maschinen bei gleichzeitigem Verwenden von umweltfreundlichen, da wässrigen, Betonoberflächenmodifizierungsmitteln ermöglicht.

**Tabelle 2: Verwendung des erfindungsgemäßen Beschichtungsmittels bei der Positivanwendung**

| | Rezeptur entspricht der wasserbasierten Rezeptur aus EP 1 526 120, die dort in Tabelle 1 gezeigt ist | Beispiel D |
|---|---|---|
| Ablauf des Kontaktverzögerers bei der Positivanwendung auf einer schiefen Betonoberfläche | ja | nein |

Tabelle 2 veranschaulicht, dass ein erfindungsgemäßer Kontaktverzögerer bei der Positivanwendung mit weniger Sorgfalt auf den frischen Beton aufgebracht werden kann, ohne auf ein Ablaufen des Kontaktverzögerers von der schiefen Betonoberfläche oder eine Pfützenbildung achten zu müssen, da dieser in Kontakt mit dem Beton nicht mehr fließt. Hieraus erfolgt neben der einfacheren Verarbeitung ein besseres, da einheitlicheres, Auswaschbild.

Es ist festzuhalten, dass die unter Bezug auf einzelne Ausführungsformen und Beispiele beschriebenen Merkmale der Erfindung, wie beispielsweise verwendete Bestandteile und deren Konzentrationen, auch bei anderen Ausführungsformen bzw. Beispielen vorhanden sein können, außer wenn es anders angegeben ist oder sich aus technischen Gründen von selbst verbietet.

## Patentansprüche

1. Wasserbasiertes Beschichtungsmittel zur Oberflächenmodifizierung von Erzeugnissen aus hydraulisch härtenden Zusammensetzungen, insbesondere aus Beton oder Mörtel, umfassend:
0,05 - 40 Gew.-% Modifizierungsmittel,
0,02 - 99 Gew.-% alkalilösliches polymeres Bindemittel,
0,00 - 4 Gew.-% Entschäumer,
0,00 - 4 Gew.-% Benetzer,
0,00 - 4 Gew.-% Konservierungsmittel,
0,00 - 10 Gew.-% Verdicker, und
der Rest Wasser,
wobei das alkalilösliche polymere Bindemittel in Gegenwart von Basen wasserlöslich ist und sich in Kontakt mit Erdalkali-lonen, insbesondere Calcium-Ionen, zersetzt bzw. abbaut.

2. Wasserbasiertes Beschichtungsmittel nach Anspruch 1, wobei das Bindemittel eine Säurezahl von 50 - 300 mg KOH/g, insbesondere 70 - 240 mg KOH/g, vorzugsweise 90 - 180 mg KOH/g, aufweist.

3. Wasserbasiertes Beschichtungsmittel nach Anspruch 1 oder 2, wobei das Bindemittel eine Molmasse von über 600 g/mol aufweist.

4. Wasserbasiertes Beschichtungsmittel nach einem der vorhergehenden Ansprüche, wobei das Bindemittel ein Polymer umfasst, das Carboxylsäure- und/oder Sulfonsäure- und/oder Sulfat- und/oder Phosphonsäure- und/oder Phosphat-Gruppen oder andere Säuregruppen mit einem pKs-Wert zwischen 1 und 7 enthält.

5. Wasserbasiertes Beschichtungsmittel nach einem der vorhergehenden Ansprüche, das als Modifizierungsmittel Fruchtsäureester, Zuckerester, Gluconsäureester, Borsäureester, Phosphorsäureester und/oder Phosphonsäureester enthält.

6. Wasserbasiertes Beschichtungsmittel nach einem der vorhergehenden Ansprüche, das als Bindemittel ein Polysaccharid enthält, das aus der aus Alginaten, Pektinen, Carrageene und Gellan Gum bestehenden Gruppe ausgewählt ist.

7. Wasserbasiertes Beschichtungsmittel nach einem der Ansprüche 1 bis 6, umfassend:
a) 26,3 Gew.-% Wasser,
b1) 2,0 Gew.-% Borax-Decahydrat,
b2) 2,0 Gew.-% Zitronensäure,
b3) 0,6 Gew.-% Aminotrismethylenphosphorsäure 50% in Wasser gelöst,
c) 40,0 Gew.-% Acrylatdispersion (Säurezahl 121 mg KOH/g, Mindestfilmbildetemperatur 4°C),
d) 0,1 Gew.-% Entschäumer,
e) 0,2 Gew.-% Benetzer,
f) 22,5 Gew.-% Füllstoff,
g1) 5,0 Gew.-% Deckweiß,
g2) 0,2 Gew.-% Farbe,
h) 0,1 Gew.-% Konservierungsmittel, und
i) 1,0 Gew.-% Verdicker.

8. Wasserbasiertes Beschichtungsmittel nach einem der Ansprüche 1 bis 6, umfassend:
a) 27,80 Gew.-% Wasser,
b) 0,78 Gew.-% Modifizierungsmittel TEC,
c) 43,84 Gew.-% Acrylatdispersion (Säurezahl 130, MFT 10°C),
d) 0,26 Gew.-% Entschäumer,
e) 0,2 Gew.-% Benetzer,
f) 20,0 Gew.-% Füllstoff,
g1) 5,0 Gew.-% Deckweiß,
g2) 0,2 Gew.-% Farbe,
h) 0,12 Gew.-% Konservierungsmittel,
i) 0,4 Gew.-% Verdicker,
k) 1,0 Gew.-% Filmbildehilfsmittel, und
l) 0,4 Gew.-% Korrosionsschutz.

9. Wasserbasiertes Beschichtungsmittel nach einem der Ansprüche 1 bis 6, umfassend:
a) 7,91 Gew.-% Wasser,
b) 21,83 Gew.% Modifizierungsmittel TEC,
c) 69,27 Gew.-% Acrylatdispersion(Säurezahl 135[mg KOH/g], Tg des Säureharzes 116[°C],
d) 0,26 Gew.-% Entschäumer,
e) 0,2 Gew.-% Benetzer,
g) 0,05 Gew.-% Farbe,
h) 0,12 Gew.-% Konservierungsmittel, und
i) 0,36 Gew.-% Verdicker.

10. Wasserbasiertes Beschichtungsmittel nach einem der Ansprüche 1 bis 6, umfassend:
a) 71,43 Gew.-% Wasser,
b) 7,62 Gew.-% Zitronensäure,
c) 0,48 Gew.-% Alginat,
f) 9,52 Gew.-% Siliziumdioxid,
g1) 9,52 Gew.-% Deckweiß,
g2) 0.95 Gew.-% Eisenoxid, und
i) 0,48 Gew.-% Verdicker.

11. Verwendung des wasserbasierten Beschichtungsmittels gemäß einem der Ansprüche 1 bis 10 bei der Negativanwendung, wobei der Anteil des polymeren Bindemittels in dem Beschichtungsmittel 10-99 Gew.-% beträgt.

12. Verwendung des wasserbasierten Beschichtungsmittels gemäß einem der Ansprüche 1 bis 6 oder 10 bei der Positivanwendung, wobei der Anteil des polymeren Bindemittels in dem Beschichtungsmittel 0,02 -10 Gew.-% beträgt.

13. Trägermaterial zur Negativanwendung mit darauf aufgebrachtem wasserbasierten Beschichtungsmittel nach einem der Ansprüche 1 bis 9.

14. Trägermaterial zur Negativanwendung nach Anspruch 13, wobei das Trägermaterial eine Polymerfolie, Papier, Pappe oder Karton, oder ein Verbundwerkstoff aus Papier, Pappe oder Karton und einer wasserdampfundurchlässigen Schicht oder Wachs oder Bitumen ist.

15. Trägermaterial zur Negativanwendung nach Anspruch 14, **dadurch gekennzeichnet, dass** die wasserdampfundurchlässige Schicht ein Polymer wie PE, PP oder SB ist.
